# EUROPEAN PATENT SPECIFICATION

(11) **EP 3 674 081 B1**
(45) Date of publication and mention of the grant of the patent: **23.02.2022**
(21) Application number: 18425112.2
(22) Date of filing: 31.12.2018
(51) Int. Cl.: B32B 18/00, C04B 38/00, C04B 111/00, B32B 3/12, F01D 25/12, F23M 5/08, F23M 20/00, F23R 3/00, F23R 3/06

(54) **HIGH-TEMPERATURE RESISTANT TILES AND MANUFACTURING METHOD THEREOF**
HOCHTEMPERATURBESTÄNDIGE FLIESEN UND HERSTELLUNGSVERFAHREN DAFÜR
CARREAUX RÉSISTANT À HAUTE TEMPÉRATURE ET SON PROCÉDÉ DE FABRICATION

(43) Date of publication of application: 01.07.2020
(73) Proprietor: Ansaldo Energia Switzerland AG, 5401 Baden (CH); ANSALDO ENERGIA S.p.A., 16152 Genova (IT)
(72) Inventor: Paul, Anish, 5200 Brugg, Aargau (CH); Stefanis, Vasileios, 5443 Niederrohrdorf, Aargau (CH); Pievaroli, Marco, 50052 Certaldo (FI) (IT)
(74) Representative: Cernuzzi, Daniele

(56) References cited:
- US-A- 5 490 892
- US-A1- 2003 059 577
- US-A1- 2009 004 425
- US-A1- 2016 348 586
- US-A1- 2018 290 330

## Description

### FIELD OF THE INVENTION

The present invention relates to high-temperature resistant tiles, particularly for lining internal surfaces of gas turbines, and a manufacturing method thereof.

### DESCRIPTION OF PRIOR ART

In the gas turbine field, it is well known the need for an effective thermal protection of components/surfaces operating at very high temperatures.

There is therefore a strong need for high-temperature highly effective components and materials.

Ceramic tiles are commonly used to cover surfaces exposed to high temperature hot gas, such as walls of combustion chambers.

Common tiles are made of monolithic ceramic, for example alumina based ceramic.

Ceramic tiles, being made of highly refractory materials, are substantially unaffected by the hot gas flow in gas turbines.

However, ceramic tiles also have some drawbacks: in particular, ceramic tiles have low mechanical properties, very poor machinability, high sensitivity to the presence of flaws, are subject to erosion due to porosity, are brittle and can therefore, under some operating conditions, be prone to failure.

In turn, such drawbacks may also cause limitations in the clamping options available for properly fastening the tiles, resulting in a restriction of the allowable acceleration at start-up, which in turn limits the gas turbine operational window, including the requirements for inspection of the tiles after an engine trip. Moreover, because of the limitations with respect to machining, the possibility to incorporate dampers to reduce vibrations is also very limited.

A possible alternative to the use of monolithic ceramic tiles in gas turbine combustors and combustion chambers would be the use of solid CMC (ceramic matrix composite) tiles (i.e. tiles made of ceramic fibers embedded in a ceramic matrix): CMC tiles can in fact provide a significant improvement in mechanical properties with respect to monolithic ceramic tiles; however, due to the amount of fiber required, such a solution would be very expensive.

Moreover, even if cooling holes can be drilled in solid CMC tiles, it is very difficult to obtain a complex network of cooling channels required for efficient cooling.

US2003/059577A1 disclose a multi-layer ceramic matrix composite structure comprising: a top layer of ceramic matrix composite material; a bottom layer of ceramic matrix composite material; and an intermediate layer of ceramic matrix composite material consisting of a plurality of adjoining hollow ceramic matrix composite structures defining a respective plurality of cooling passages through the multi-layer ceramic matrix composite structure.

US2018/290330A1 discloses a sandwich panel made of a ceramic-matrix composite-material, the sandwich panel including a core formed of a plurality of cells which extend vertically between a first skin and a second skin. US2016/348586 discloses a liner used for lining gas turbine engines. The lines has solid upper and lower CMC sheets and an open-celled CMC foam layer in between these 2 sheets. US5490892 shows a panel of thermostructural composite material, e.g. a carbon-carbon composite or a ceramic matrix composite. The panel has two coverings or skins and a cellular core that is honeycomb-shaped.

Therefore, there is still need for tiles with improved reliability and functionality for use in gas turbines.

### DISCLOSURE OF THE INVENTION

Accordingly, it is an object of the present invention to provide a high-temperature resistant tiles, particularly for lining internal surfaces of gas turbines, and the manufacturing method thereof, suitable for overcoming the foregoing problems of the prior art.

In particular, it is an object of the present invention to provide tiles to be used in gas turbines, for example as thermal protection tiles in combustors (combustion chambers).

The present invention accordingly relates to a high-temperature resistant tile, particularly for lining internal surfaces of gas turbines, as defined in Claim 1, and to a method of manufacturing such a tile as defined in Claim 7.

The invention also relates to the use of such a tile as a covering tile to line internal surfaces of gas turbines, as defined in Claim 12.

Advantageous preferred features of the invention are the subject matter of the dependent claims.

The invention provides a low cost, high-temperature resistant ceramic matrix composite (CMC) tile that can be used to replace current monolithic ceramic tiles in gas turbines, particularly in combustors of gas turbines.

CMC materials can offer superior high temperature mechanical properties and improved shaping possibilities, machinability, erosion protection and resistance against failure compared to monolithic ceramic tiles.

In order to reduce the amount of expensive fibers required in the manufacture of solid CMC tiles, and thus the overall production cost, the invention takes full advantage of filament winding manufacturing technique. In fact, the invention provides a manufacturing method wherein the capabilities of the filament winding process are fully exploited for manufacturing CMCs with integral voids within the CMC structure.

As a result, a "hybrid" structure is obtained, consisting of a base solid layer, a hollow structure built thereon, and a top solid layer covering the hollow structure. The hollow structure allows a significant reduction of the amount of fibers required and consequently reduces production cost; moreover, the winding time, and thus the time required to manufacture the tile, are also significantly reduced.

The same filament winding method is also used to provide the tile with an anchoring feature, so that the CMC structure can be combined with additional layers of a porous ceramic material, e.g. a ceramic foam, a thermal barrier coating (TBC) and/or an environmental barrier coating (EBC), to further increase the temperature withstanding capabilities and/or corrosion resistance of the tile.

Use of a low conductivity porous ceramic layer thermal protection system enables combustion at very high temperatures, thus reducing emissions and increasing the overall efficiency of the gas turbine.

In addition, integral cooling channels can be easily and effectively incorporated in the tile structure during the winding process, or by incorporating fugitive materials (e.g. carbon fiber bundles or graphite rods) which are subsequently burned off during binder removal and sintering process.

The invention also improves the design possibility with respect to the integration of dampers. The winding pattern of the fibers in the hollow structure can in fact be tailored so that vibration damper volumes can be created thereon without any impact on the tile itself, during manufacturing. In addition, a "small" damper volume can also be integrated inside the CMC tile, during manufacturing.

Additionally, the "hybrid" CMC tile of the invention (comprising the CMC structure and optionally the anchoring features and integral cooling channels), also including the ceramic outer layer, is advantageously produced in a single manufacturing step (all the elements are sintered together at the same time).

The invention thus achieves the following main advantages:
the tiles of the invention are cheaper to manufacture than comparable solid CMC tiles: in fact, the invention allows a significant reduction in the amount of expensive fibers required, due to the "hybrid" structure (solid/hollow structure);
the tiles of the invention can be produced in a single manufacturing step;
the tiles of the invention have superior mechanical properties compared to monolithic ceramic tiles, while exhibiting low thermal conductivity, similar to monolithic ceramic tiles;
the tiles of the invention have substantially improved reliability and increased lifetime;
the tiles of the invention allow increased/improved operational windows of the gas turbines;
the tiles of the invention have superior machinability compared to monolithic ceramic tiles, and it is also possible to drill holes for cooling air inlet/outlet as well as for damper integration;
the tiles of the invention are insensitive to the presence of cracks, defects, etc.
the tiles of the invention allow cooling features/channels to be formed in the tiles during the sintering process step, thus allowing novel integral near-wall cooling concepts to be realized;
the tiles of the invention allow a broad range of fixation and fastening options of the tiles;
the tiles of the invention allow integration of dampers.

### BRIEF DESCRIPTION OF DRAWINGS

The invention is further described by way of example in the following non-limiting embodiments, with reference to the accompanying drawings in which:
- Figure 1 is a schematic perspective view, with parts not in scale and parts in transparency for illustrative purpose, of a tile according to an embodiment of the invention;
- Figure 2 is a schematic sectional view of a detail of the tile of Figure 1;
- Figure 3 is a schematic sectional view of a detail of an embodiment not according to the invention;
- Figures 4.1 to 4.9 are schematic views of respective steps of a method for manufacturing the tile according to the invention;
- Figure 5 is a schematic sectional view of a detail of another embodiment of the tile of the invention;
- Figure 6 is a partial schematic perspective view, with parts not in scale and parts in transparency for illustrative purpose, of a tile according to another embodiment of the invention;
- Figures 7-8 are schematic sectional views of respective details of other embodiments not according to the invention;
- Figure 9 is a schematic sectional view of a detail of another embodiment of the tile of the invention;
- Figure 10 is a partial schematic perspective view, with parts not in scale and parts in transparency for illustrative purpose, of a tile according to another embodiment of the invention;
- Figures 11.1 to 11.4 are schematic sectional views of respective details of other embodiments of the tile of the invention.

### DETAILED DESCRIPTION OF PREFERRED EMBODIMENTS OF THE INVENTION

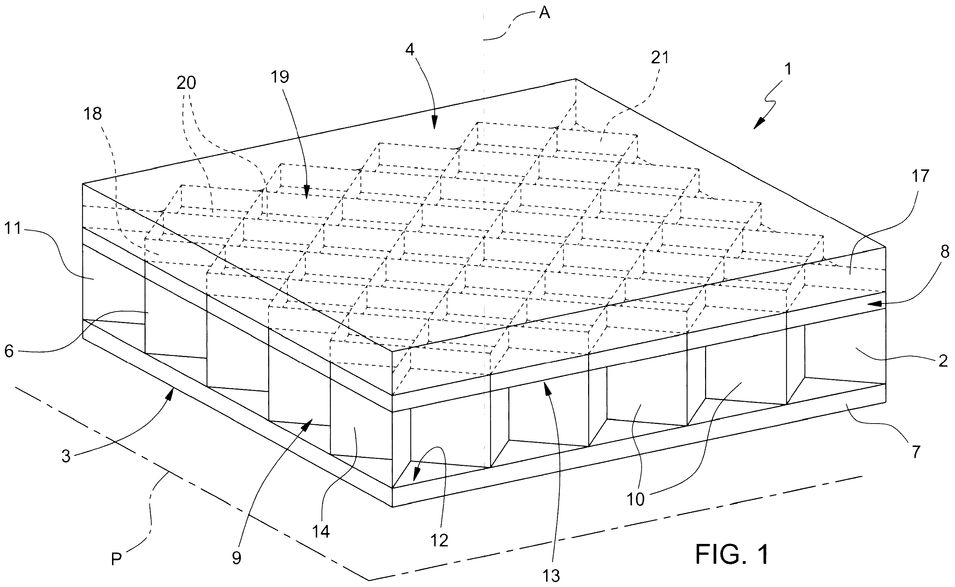

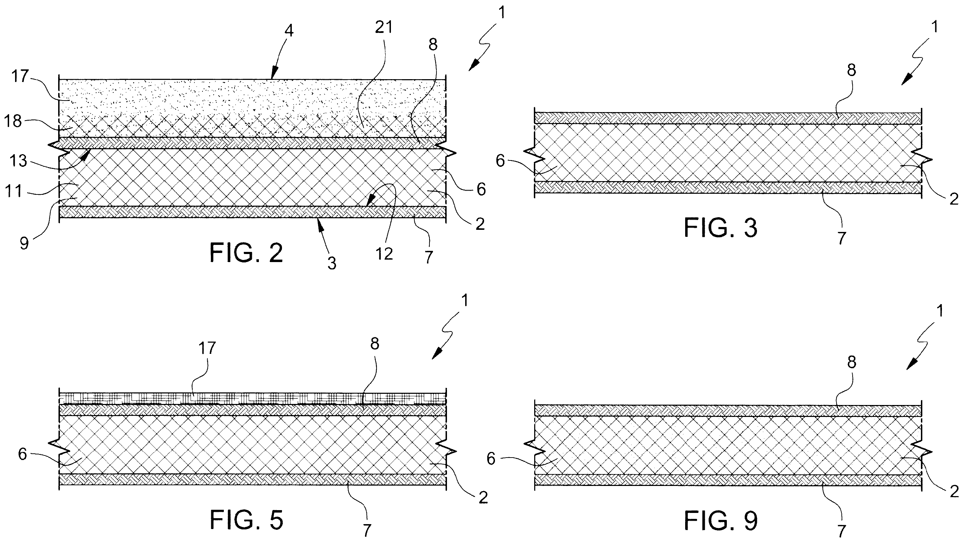

With reference to Figures 1 and 2, a tile 1, in particular a high-temperature resistant tile and for example for lining internal surfaces of gas turbines, has a substantially flat, prismatic body 2.

In particular, the body 2 has a substantially planar configuration, i.e. lies substantially parallel to a reference plane P; the body 2 extends between two opposite flat and parallel faces 3, 4 along an axis A, perpendicular to the reference plane P.

Of course, the tile 1 can have various shapes and/or dimensions.

The body 2 is made of a CMC (ceramic matrix composite) material consisting of ceramic fibers embedded in a ceramic matrix. The matrix and the fibers can consist of any ceramic material.

The tile 1, i.e. the body 2 thereof, comprises a hollow CMC structure 6 between two opposite solid CMC layers 7, 8, namely a lower solid CMC layer 7 and an upper solid CMC layer 8.

Advantageously, the hollow CMC structure 6 and the solid CMC layers 7, 8 are made of the same CMC material, having the same kind of ceramic fibers embedded in the same ceramic matrix.

The hollow CMC structure 6 comprises a cell pattern 9, consisting of a plurality of cells 10 defined by respective cavities and arranged side-by-side on at least one cell layer 11.

Here and in the following, a cell pattern is intended to mean any pattern of polyhedral hollow cells, arranged on one or more planes, such as, for example, a honeycomb pattern.

The cells 10 may have various shapes, being in particular square, hexagonal, etc. (in plan view).

For example, in the embodiment of Figure 1, the cells 10 are substantially square and arranged on a single cell layer 11; of course, there can be more cell layers 11, and the cells 10 can have different shapes.

The cell pattern 9 extends between opposite faces 12, 13, facing each other and substantially parallel to each other and to the reference plane P, of the layers 7, 8.

The cells 10 are delimited by lateral walls 14, which are made of the CMC material, and are closed at respective opposite ends by the faces 12, 13 of the layers 7, 8.

In the embodiment of Figure 1 (but not necessarily), the lateral walls 14 are substantially perpendicular to the faces 12, 13 of the layers 7, 8 and hence to the reference plane P, and substantially parallel to the axis A.

The solid CMC layers 7, 8 are solid homogeneous layers, having no cavities or void spaces inside the CMC material.

The whole body 2 is made of CMC material, applied and shaped to define the body 2 by a filament winding process, as disclosed in greater detail herein below.

The tile 1 also comprises an outer covering layer 17 applied on the upper solid CMC layer 8 and intended to be exposed, in use, to the hot gas. In particular, the covering layer 17 is made of a ceramic foam.

The covering layer 17 is attached to the upper solid CMC layer 8.

As shown in Figures 1-2, the body 2 comprises an anchoring layer 18, i.e. a layer of anchoring features, applied upon and projecting from the upper solid CMC layer 8.

The anchoring layer 18 too, similarly to the hollow CMC structure 6, has a hollow structure and comprises, in particular, an auxiliary cell pattern 19 consisting of a plurality of cells 20 defined by respective cavities and arranged side-by-side.

The anchoring layer 18 is advantageously made of the same CMC material of the other parts of the body 2 (i.e. the solid CMC layers 7, 8 and the hollow CMC structure 6).

The cell pattern 19 of the anchoring layer 18 defines an anchoring feature 21 penetrating inside the covering layer 17.

The ceramic foam of the covering layer 17 penetrates between the cells 20 of the auxiliary cell pattern 19. In other words, the covering layer 17 and the anchoring layer 18 interpenetrate with each other.

The ceramic foam of the covering layer 17 is preferably selected to have a thermal conductivity lower than the CMC material of the body 2 in order to achieve a higher temperature gradient across the thickness (i.e. parallel to the axis A) of the covering layer 17.

The thickness of the covering layer 17 can be selected to achieve even higher temperature gradients.

In a variation not according to the invention, the tile 1 does not have the covering layer 17 and, as shown in Figure 3, the tile 1 basically has a three-layer structure; the tile 1, i.e. the body 2, consists only of the lower solid CMC layer 7, the hollow CMC structure 6 and the upper solid CMC layer 8.

If there is no covering layer 17, there is no need for the anchoring layer 18 as well.

The tile 1 of the invention is advantageously prepared by a manufacturing method basically comprising a filament winding process.

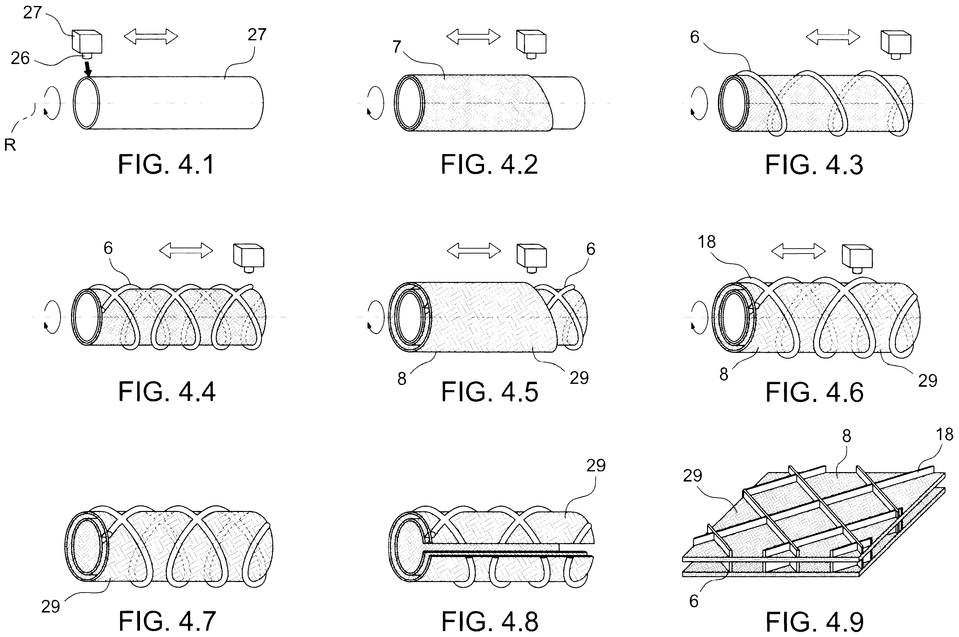

In particular, with reference also to Figures 4.1 to 4.9, the tile 1 is manufactured by winding ceramic slurry impregnated ceramic fiber bundles on a rotating mandrel 25, the ceramic slurry material forming a ceramic matrix embedding the ceramic fibers so as to define a CMC material.

In the filament winding process, the mandrel 25 rotates around a spindle defining a rotation axis R of the mandrel 25, while a delivery nozzle 26 on a carriage 27 (movable along a longitudinal axis, for example parallel to the rotation axis R) lays down the ceramic slurry impregnated fiber bundles in the desired pattern and angle.

The slurry impregnated ceramic fiber bundles are wound on the mandrel 25 so as to define the lower solid CMC layer 7, the hollow CMC structure 6 and the upper solid CMC layer 8, and to form together a preform 29 on the mandrel 25, having a substantially tubular (cylindrical) shape and extending along and about a longitudinal axis defined by the axis R.

If the tile 1 has to include also the covering layer 17, ceramic slurry impregnated ceramic fiber bundles are also wound to define the anchoring layer 18.

Therefore, the filament winding process comprises the steps of:
- winding on the mandrel 25 the lower solid CMC layer 7;
- winding on the mandrel 25, upon the lower solid CMC layer 7, the hollow CMC structure 6;
- winding on the mandrel 25, upon the hollow CMC structure 6, the upper solid CMC layer 8;
- if the tile 1 has to be provided with the covering layer 17 and therefore there is the need for the anchoring feature 21, winding on the mandrel 25, upon the upper solid CMC layer 8, the anchoring layer 18.

Then, the preform 29 is removed from the mandrel 25, longitudinally cut along a cut line parallel to the axis R, and flattened so as the preform 29 assumes a substantially plane configuration defining the body 2.

If the covering layer 17 is not required, the body 2 is send to a drying step and then to a sintering step, to dry and sinter the CMC material.

Otherwise, the body 2 is coupled to the covering layer 17.

The covering layer 17 can be prepared and dried/sintered separately from the body 2.

However, more advantageously, the covering layer 17 is formed directly on the body 2. For example, a ceramic suspension with foaming agents is poured on the top of the body 2, not yet sintered, so as to penetrate in the cells 20 of the auxiliary cell pattern 19, i.e. inside the anchoring layer 18, and to form the covering layer 17 upon the anchoring layer 18.

Then, the body 2 and the covering layer 17 attached thereto are dried and sintered together.

The covering layer 17 can also be differently made. For example, as shown in Figure 5, instead of a covering layer 17 made of a ceramic foam, the covering layer 17 can be defined by a TBC (thermal barrier coating) or EBC (environmental barrier coating), having per se a known structure and deposited onto the upper solid CMC layer 8 by any known methods.

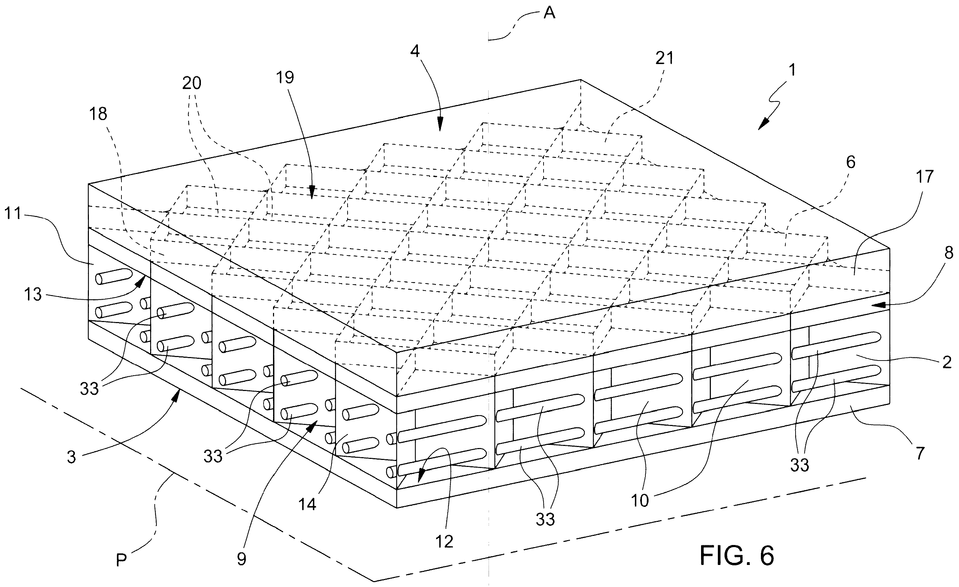

In the embodiment of Figure 6, the tile 1 is provided with cooling channels 33 which are incorporated in the body 2 of the tile 1 and specifically in the hollow CMC structure 6.

In particular, the tile 1 has a plurality of cooling channels 33 extending through the lateral walls 14 of the cell pattern 9.

In the embodiment of Figure 6, the cooling channels 33 are parallel to one another and to the reference plane P, and thus perpendicular to the axis A, and are laterally spaced apart from one another; the cooling channels 33 can be arranged on one or more level, spaced apart from one another parallel to the axis A. It remains understood, however, that the cooling channels can be differently arranged.

In some embodiments, the cooling channels 33 are defined by respective tubular elements 34 made of the same CMC material of the body 2.

Advantageously, also the tubular elements 34 are created by filament winding, in particular during the same filament winding process used for making the hollow CMC structure 6.

In other embodiments, the cooling channels 33 are obtained by using fugitive or sacrificial materials in the shape of elongated elements, such as carbon fiber bundles or graphite rods, or other similar elements, which are embedded in the hollow CMC structure 6 during the filament winding process and are then burned off during the sintering step of the body 2.

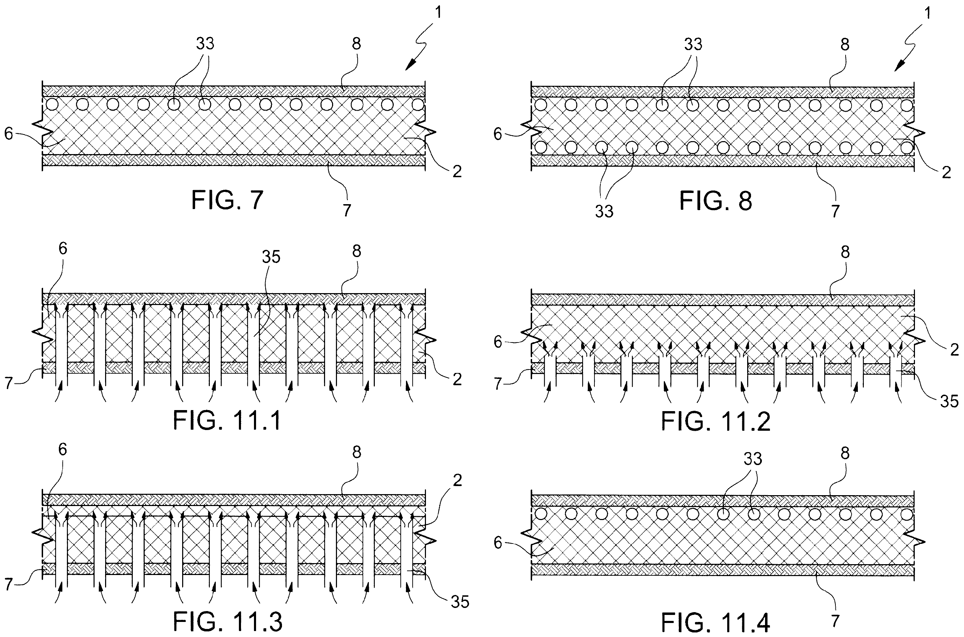

For example, the tile 1 is provided with a first group of cooling channels 33 which are preferably arranged in proximity of the upper solid CMC layer 8, i.e. closer to the upper solid CMC layer 8 than to the lower solid CMC layer 7 (Figure 7); and/or with a second group of cooling channels 33 which are preferably arranged in proximity of the lower solid CMC layer 7, i.e. closer to the lower solid CMC layer 7 than to the upper solid CMC layer 8 (figure 8).

The cooling channels 33 can be used both in tiles which do not include any covering layer (Figures 7-8), not according to the invention, and in tiles provided with a covering layer (Figure 6) according to the invention.

In the embodiment of Figure 9, the hollow CMC structure 6 is filled with a ceramic foam, having preferably a thermal conductivity lower than the CMC material of the body 2.

The ceramic foam fills the cells 10 (i.e. cavities) of the cell pattern 9 of the hollow CMC structure 6.

The ceramic slurry that produces the foam is advantageously poured into the cells 10 during the filament winding process and specifically after the cell pattern 9 is formed. The slurry for the foam can also be poured into the cells 10 after the filament wound structure is removed from the mandrel 25 and after cutting and flattening the structure.

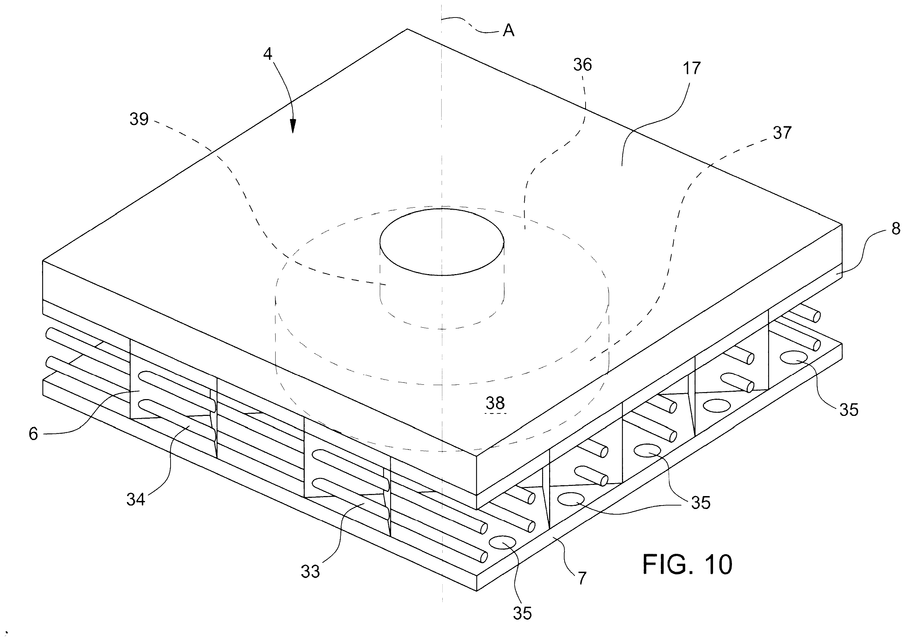

In other embodiments, shown in Figures 10 and 11.1 to 11.4, the tile 1 is provided with cooling holes 35 which are formed through the body 2 for air circulation in the tile 1.

In particular, the holes 35 are substantially parallel to the axis A and perpendicular to the reference plane P.

The holes 35 can extend through the lower solid CMC layer 7 only (Figures 10 and 11.1); or through the lower solid CMC layer 7 and the hollow CMC structure 6 (Figure 11.2) .

The holes 35 can be arranged on several parallel rows, but also in any other pattern.

The holes 35 can also be interconnected with the cooling channels 33 as previously described, as shown by way of example in Figures 11.3 and 11.4 (which are respective sectional views perpendicular to each other).

The holes 35 are preferably drilled in the tile 1 after the sintering step.

In the embodiment of Figure 10, the tile 1 is provided also with a vibration damper element 36, for example a Helmholtz resonator, integrated in the tile 1.

The damper element 36 comprises an enclosure 37, housed inside the hollow CMC structure 6 and delimiting an inner resonating chamber 38, and a neck duct 39, having a cross section smaller than the enclosure 37 (i.e. than the resonating chamber 38) and connecting the resonating chamber 38 with the outside; the neck duct 39 has an opening 40 on an outer surface (for example, defined by the face 4) of the tile 1 of such dimensions that the enclosure 37 resonates at a preset frequency.

If the tile 1 also comprises an outer covering layer 17, the neck duct 39 of the damper element 36 extends through the covering layer 17 and the opening 40 is formed on an outer face (face 4) of the covering layer 17.

The damper element 36 can be advantageously realized on the tile 1 during the filament winding process and in particular while the body 2 is formed by filament winding.

In other embodiments, a damper volume can be integrated inside the tile 1, during manufacturing, simply leaving a void space in the body 2 during the filament winding process.

It is important to underline that, even if the above-mentioned embodiments have been individually disclosed, the technical features of such embodiments can be combined together.

In a preferred use, the tiles of the invention are used as covering tiles to line internal surfaces of a gas turbine combustor, in particular to line a combustion chamber.

It is however clear to the skilled person that the tiles of the invention can be also used in other applications, such as in other parts of a gas turbine, but also in other machines.

## Claims

1. A tile (1), in particular a high-temperature resistant tile for lining internal surfaces of gas turbines, having a body (2) made of a CMC material consisting of ceramic fibers embedded in a ceramic matrix; the body (2) comprising a hollow CMC structure (6) between a lower solid CMC layer (7) and an upper solid CMC layer (8); wherein the lower solid CMC layer (7) and the upper solid CMC layer (8) are solid homogeneous layers, having no cavities or void spaces inside the CMC material; and the hollow CMC structure (6) comprises a cell pattern (9), extending between opposite faces (12, 13), facing each other and substantially parallel to each other, of the lower solid CMC layer (7) and the upper solid CMC layer (8) respectively, and consisting of a plurality of cells (10) defined by respective cavities and delimited by lateral walls (14) and arranged side-by-side on at least one cell layer (11); **characterized by** comprising an outer covering layer (17) made of a ceramic foam having a thermal conductivity lower than the CMC material of the body (2) and applied on and attached to the upper solid CMC layer (8); and wherein the body (2) comprises an anchoring feature (21) projecting from the upper solid CMC layer (8) and penetrating inside the covering layer (17); the anchoring feature (21) being defined by an anchoring layer (18) of the body (2), made of the same CMC material of the other parts of the body (2) and having a hollow structure and comprising an auxiliary cell pattern (19) consisting of a plurality of second cells (20) defined by respective cavities and arranged side-by-side and filled with the ceramic foam of the covering layer (17), so as the covering layer (17) and the anchoring layer (18) are interpenetrated with each other.

2. The tile according to claim 1, wherein the body (2) is made of CMC material applied and shaped by a filament winding process.

3. The tile according to any one of the preceding claims, wherein the tile (1) is provided with cooling channels (33) which are incorporated in the body (2) of the tile (1) and specifically in the hollow CMC structure (6) and extend through the lateral walls (14) of the cell pattern (9), the cooling channels (33) being defined by respective tubular elements (34) made of the same CMC material of the body (2).

4. The tile according to claim 3, wherein the tile (1) is provided with a first group of cooling channels (33) which are arranged in proximity of the upper solid CMC layer (8); and/or a second group of cooling channels (33) which are arranged in proximity of the lower solid CMC layer (7).

5. The tile according to any one of the preceding claims, wherein the hollow CMC structure (6) is filled with a ceramic foam, having a thermal conductivity lower than the CMC material of the body (2); the ceramic foam filling the cells (10) of the cell pattern (9) of the hollow CMC structure (6).

6. The tile according to any one of the preceding claims, wherein the tile (1) is provided with cooling holes (35) which are formed through the body (2) for air circulation in the tile (1); and/ or with a vibration damper element (36), for example a Helmholtz resonator, integrated in the tile (1).

7. A method for manufacturing a tile (1) according to any one of the previous claims, wherein the body (2) of the tile (1) is prepared by a filament winding process, in which ceramic fiber bundles are impregnated with a ceramic slurry and then wound on a rotating mandrel (25), where the ceramic slurry, forming a ceramic matrix during sintering, is integrated with the ceramic fiber bundles so as to define the CMC material ,
wherein in the filament winding process ceramic fiber bundles, impregnated with the ceramic slurry, are wound on the mandrel (25) so as to define the lower solid CMC layer (7), the hollow CMC structure (6) and the upper solid CMC layer (8), and to form together a preform (29) on the mandrel (25), having a predominantly tubular shape; and the method further comprises the step of removing the preform (29) from the mandrel (25), cutting the preform (29) longitudinally along a cut line parallel to a longitudinal axis (R) of the preform (29), flattening the preform (29) to a substantially plane configuration, followed by a drying and sintering step to define the CMC of the body (2) ,
wherein in the filament winding process additional ceramic fiber bundles, impregnated with a ceramic slurry, are wound on the mandrel (25), upon the upper solid CMC layer (8), to form an anchoring feature (21); and the method comprises a step of attaching a covering layer (17) onto the upper solid CMC layer (8) by the anchoring feature (21); the covering layer (17) being formed directly on the body (2) by pouring a ceramic suspension with foaming agents on the top of the body (2), so as to penetrate inside the anchoring feature (21); the body (2) and the covering layer (17) attached thereto being then dried and sintered together.

8. The method according to claim 7, comprising a step of creating tubular elements (34) in the hollow CMC structure (6) by filament winding, during the same filament winding process used for making the hollow CMC structure (6) and so as to define respective cooling channels (33) in the body (2).

9. The method according to any one of claims 7 to 8, comprising a step of embedding in the hollow CMC structure (6), during the filament winding process thereof, fugitive or sacrificial materials in the shape of elongated elements, such as carbon fibers bundles or graphite rods or other similar elements, which are then burned off during a sintering step of the body (2) to create respective cooling channels (33).

10. The method according to any one of claims 7 to 9, comprising a step of drilling holes (35) in the tile (1) for air passage.

11. The method according to any one of claims 7 to 10, comprising a step of providing the tile (1) with a vibration damper element (36), which is mounted on the tile (1) during the filament winding process and in particular while the body (2) is formed by filament winding; or is defined by a void space left in the body (2) during the filament winding process.

12. Use of the tile (1) according to any one of claims 1 to 6 to line an internal surface of a gas turbine, in particular a surface of a combustor or combustion chamber.

## Patentansprüche

1. Kachel (1), insbesondere eine hochtemperaturbeständige Kachel zum Auskleiden von Innenflächen von Gasturbinen, mit einem Körper (2), der aus einem CMC-Material gefertigt ist, das aus in einer Keramikmatrix eingebetteten Keramikfasern besteht; wobei der Körper (2) eine hohle CMC-Struktur (6) zwischen einer unteren massiven CMC-Schicht (7) und einer oberen massiven CMC-Schicht (8) umfasst; wobei die untere massive CMC-Schicht (7) und die obere massive CMC-Schicht (8) massive homogene Schichten sind, die keine Hohlräume oder Leerräume innerhalb des CMC-Materials aufweisen; wobei die hohle CMC-Struktur (6) ein Zellenmuster (9) aufweist, das sich zwischen gegenüberliegenden, einander zugewandten und im Wesentlichen parallelen Flächen (12, 13) der unteren massiven CMC-Schicht (7) bzw. der oberen massiven CMC-Schicht (8) erstreckt und aus einer Vielzahl von Zellen (10) besteht, die durch entsprechende Hohlräume definiert sind und durch Seitenwände (14) begrenzt sind und nebeneinander in wenigstens einer Zellenschicht (11) angeordnet sind; **dadurch gekennzeichnet, dass** die Kachel eine äußere Deckschicht (17) umfasst, die aus einem keramischen Schaum mit einer niedrigeren Wärmeleitfähigkeit als das CMC-Material des Körpers (2) gefertigt ist und auf der oberen massiven CMC-Schicht (8) aufgebracht und daran befestigt ist; und wobei der Körper (2) ein Verankerungsmerkmal (21) umfasst, das von der oberen massiven CMC-Schicht (8) hervorsteht und in die Deckschicht (17) eindringt; wobei das Verankerungsmerkmal (21) durch eine Verankerungsschicht (18) des Körpers (2) definiert ist, die aus dem gleichen CMC-Material wie die anderen Teile des Körpers (2) gefertigt ist und eine hohle Struktur aufweist und ein Hilfszellenmuster (19) umfasst, das aus einer Vielzahl von zweiten Zellen (20) besteht, die durch entsprechende Hohlräume definiert und nebeneinander angeordnet und mit dem keramischen Schaum der Deckschicht (17) gefüllt sind, so dass die Deckschicht (17) und die Verankerungsschicht (18) einander durchdringen.

2. Kachel nach Anspruch 1, wobei der Körper (2) aus CMC-Material gefertigt ist, das durch einen Filament-Wickelprozess aufgebracht und geformt worden ist.

3. Kachel nach einem der vorangehenden Ansprüche, wobei die Kachel (1) mit Kühlkanälen (33) versehen ist, die in den Körper (2) der Kachel (1) und insbesondere in die hohle CMC-Struktur (6) eingearbeitet sind und sich durch die Seitenwände (14) des Zellenmusters (9) erstrecken, wobei die Kühlkanäle (33) durch entsprechende rohrförmige Elemente (34) definiert sind, die aus demselben CMC-Material wie der Körper (2) gefertigt sind.

4. Kachel nach Anspruch 3, wobei die Kachel (1) mit einer ersten Gruppe von Kühlkanälen (33) versehen ist, die in der Nähe der oberen massiven CMC-Schicht (8) angeordnet sind; und/oder einer zweiten Gruppe von Kühlkanälen (33), die in der Nähe der unteren massiven CMC-Schicht (7) angeordnet sind.

5. Kachel nach einem der vorangehenden Ansprüche, wobei die hohle CMC-Struktur (6) mit einem keramischen Schaum gefüllt ist, der eine geringere Wärmeleitfähigkeit als das CMC-Material des Körpers (2) aufweist; wobei der keramische Schaum die Zellen (10) des Zellenmusters (9) der hohlen CMC-Struktur (6) ausfüllt.

6. Kachel nach einem der vorangehenden Ansprüche, wobei die Kachel (1) mit Kühlungslöchern (35) versehen ist, die für eine Luftzirkulation in der Kachel (1) durch den Körper (2) ausgebildet sind; und/oder mit einem Schwingungsdämpfungselement (36), beispielsweise einem Helmholtz-Resonator, das in die Kachel (1) integriert ist.

7. Verfahren zum Herstellen einer Kachel (1) nach einem der vorangehenden Ansprüche, wobei der Körper (2) der Kachel (1) mittels eines Filament-Wickelprozesses hergestellt wird, bei dem keramische Faserbündel mit einer keramischen Aufschlämmung imprägniert werden und dann auf einen rotierenden Dorn (25) gewickelt werden, wobei die keramische Aufschlämmung, die während eines Sinterns eine keramische Matrix bildet, mit den keramischen Faserbündeln integriert wird, um das CMC-Material zu definieren, wobei in dem Filament-Wickelprozess keramische Faserbündel, die mit der keramischen Aufschlämmung imprägniert sind, auf den Dorn (25) gewickelt werden, um die untere massive CMC-Schicht (7), die hohle CMC-Struktur (6) und die obere massive CMC-Schicht (8) zu definieren und um zusammen einen Vorformling (29) auf dem Dorn (25) zu bilden, der eine vorwiegend röhrenförmige Form aufweist; und wobei das Verfahren ferner den Schritt des Entfernens des Vorformlings (29) von dem Dorn (25), des Schneidens des Vorformlings (29) in Längsrichtung entlang einer Schnittlinie parallel zu einer Längsachse (R) des Vorformlings (29), des Abflachens des Vorformlings (29) zu einer im Wesentlichen ebenen Konfiguration, gefolgt von einem Trocknungs- und Sinterungsschritt zum Definieren des CMC-Materials des Körpers (2) umfasst, wobei in dem Filament-Wickelprozess zusätzliche Keramikfaserbündel, die mit einer Keramikaufschlämmung imprägniert sind, auf dem Dorn (25) auf die obere massive CMC-Schicht (8) gewickelt werden, um ein Verankerungsmerkmal (21) zu bilden; und das Verfahren einen Schritt des Anbringens einer Deckschicht (17) auf der oberen massiven CMC-Schicht (8) mittels des Verankerungsmerkmals (21) umfasst; wobei die Deckschicht (17) direkt auf dem Körper (2) gebildet wird, indem eine keramische Suspension mit Schaumbildnern auf die Oberseite des Körpers (2) gegossen wird, so dass sie in das Innere des Verankerungsmerkmals (21) eindringt; wobei der Körper (2) und die daran angebrachte Deckschicht (17) dann zusammen getrocknet und gesintert werden.

8. Verfahren nach Anspruch 7, umfassend einen Schritt des Erzeugens röhrenförmiger Elemente (34) in der hohlen CMC-Struktur (6) durch Filament-Wickeln während desselben Filament-Wickelprozesses, der für die Herstellung der hohlen CMC-Struktur (6) verwendet wird, um entsprechende Kühlkanäle (33) in dem Körper (2) zu definieren.

9. Verfahren nach einem der Ansprüche 7 bis 8, umfassend einen Schritt des Einbettens von flüchtigen Materialien oder Opfermaterialien in Form von länglichen Elementen, wie Kohlenstofffaserbündeln oder Graphitstäben oder anderen ähnlichen Elementen, in die hohle CMC-Struktur (6) während des Filament-Wickelprozesses, die dann während eines Sinterungsschritts des Körpers (2) verbrannt werden, um entsprechende Kühlkanäle (33) zu bilden.

10. Verfahren nach einem der Ansprüche 7 bis 9, umfassend einen Schritt des Bohrens von Löchern (35) in die Kachel (1) für den Luftdurchgang.

11. Verfahren nach einem der Ansprüche 7 bis 9, umfassend einen Schritt des Versehens der Kachel (1) mit einem Schwingungsdämpfungselement (36), das während des Filament-Wickelprozesses und insbesondere während des Bildens des Körpers (2) durch das Filament-Wickeln auf der Kachel (1) angebracht wird; oder das durch einen während des Filament-Wickelprozesses im Körper (2) belassenen Leerraum definiert wird.

12. Verwendung der Kachel (1) nach einem der Ansprüche 1 bis 6 zum Auskleiden einer Innenfläche einer Gasturbine, insbesondere einer Oberfläche eines Brenners oder einer Brennkammer.

## Revendications

1. Un carreau (1), en particulier un carreau résistant aux hautes températures pour revêtir des surfaces internes de turbines à gaz, ayant un corps (2) fait d'un matériau CMC consistant en des fibres céramiques noyées dans une matrice céramique ; le corps (2) comprenant une structure CMC creuse (6) entre une couche CMC solide inférieure (7) et une couche CMC solide supérieure (8) ; dans lequel la couche CMC solide inférieure (7) et la couche CMC solide supérieure (8) sont des couches homogènes solides, n'ayant pas de cavités ou d'espaces vides à l'intérieur du matériau CMC ; et la structure CMC creuse (6) comprend un motif alvéolaire (9), s'étendant entre des faces opposées (12, 13), face à face et sensiblement parallèles l'une à l'autre, de la couche CMC solide inférieure (7) et de la couche CMC solide supérieure (8) respectivement, et consistant en une pluralité d'alvéoles (10) définies par des cavités respectives et délimitées par des parois latérales (14) et agencées côte à côte sur au moins une couche alvéolaire (11) ; **caractérisé en ce qu'**il comprend une couche de couverture externe (17) faite d'une mousse céramique ayant une conductivité thermique inférieure au matériau CMC du corps (2) et appliquée et fixée sur la couche CMC solide supérieure (8) ; et dans lequel le corps (2) comprend un accessoire d'ancrage (21) faisant saillie depuis la couche CMC solide supérieure (8) et pénétrant à l'intérieur de la couche de couverture (17) ; l'accessoire d'ancrage (21) étant défini par une couche d'ancrage (18) du corps (2), faite du même matériau CMC que les autres parties du corps (2) et ayant une structure creuse et comprenant un motif alévolaire auxiliaire (19) consistant en une pluralité de secondes alévoles (20) définies par des cavités respectives et agencées côte à côte et remplies de la mousse céramique de la couche de couverture (17), de sorte que la couche de couverture (17) et la couche d'ancrage (18) soient interpénétrées l'une par l'autre.

2. Carreau selon la revendication 1, dans lequel le corps (2) est fait d'un matériau CMC appliqué et mis en forme par un processus d'enroulement filamentaire.

3. Carreau selon l'une quelconque des revendications précédentes, dans lequel le carreau (1) est muni de canaux de refroidissement (33) qui sont incorporés dans le corps (2) du carreau (1) et spécifiquement dans la structure CMC creuse (6) et s'étendent à travers les parois latérales (14) du motif avéolaire (9), les canaux de refroidissement (33) étant définis par des éléments tubulaires respectifs (34) faits du même matériau CMC que le corps (2).

4. Carreau selon la revendication 3, dans lequel le carreau (1) est pourvu d'un premier groupe de canaux de refroidissement (33) qui sont agencés à proximité de la couche CMC solide supérieure (8) ; et/ou d'un second groupe de canaux de refroidissement (33) qui sont agencés à proximité de la couche CMC solide inférieure (7).

5. Carreau selon l'une quelconque des revendications précédentes, dans lequel la structure CMC creuse (6) est remplie d'une mousse céramique, ayant une conductivité thermique inférieure au matériau CMC du corps (2) ; la mousse céramique remplissant les alvéoles (10) du motif alvéolaire (9) de la structure CMC creuse (6).

6. Carreau selon l'une quelconque des revendications précédentes, dans lequel le carreau (1) est muni de trous de refroidissement (35) qui sont formés à travers le corps (2) pour une circulation d'air dans le carreau (1) ; et/ou d'un élément amortisseur de vibrations (36), par exemple un résonateur de Helmholtz, intégré dans le carreau (1).

7. Procédé de fabrication d'un carreau (1) selon l'une quelconque des revendications précédentes, dans lequel le corps (2) du carreau (1) est préparé par un processus d'enroulement filamentaire, dans lequel des faisceaux de fibres céramiques sont imprégnés d'une suspension céramique puis enroulés sur un mandrin (25) rotatif, où la suspension céramique, formant une matrice céramique pendant le frittage, est intégrée aux faisceaux de fibres céramiques de manière à définir le matériau CMC,
dans lequel, dans le processus d'enroulement filamentaire, des faisceaux de fibres céramiques, imprégnés de la suspension céramique, sont enroulés sur le mandrin (25) de manière à définir la couche CMC solide inférieure (7), la structure CMC creuse (6) et la couche CMC solide supérieure (8), et à former ensemble une préforme (29) sur le mandrin (25), ayant une forme principalement tubulaire ; et le procédé comprend en outre l'étape consistant à retirer la préforme (29) du mandrin (25), couper la préforme (29) longitudinalement le long d'une ligne de coupe parallèle à un axe longitudinal (R) de la préforme (29), aplatir la préforme (29) jusqu'à une configuration sensiblement plane, avant une étape de séchage et de frittage pour définir le CMC du corps (2),
dans lequel dans le processus d'enroulement filamentaire, des faisceaux de fibres céramiques supplémentaires, imprégnés d'une suspension céramique, sont enroulés sur le mandrin (25), sur la couche CMC solide supérieure (8), pour former un accessoire d'ancrage (21) ; et le procédé comprend une étape consistant à attacher une couche de couverture (17) sur la couche CMC solide supérieure (8) par l'accessoire d'ancrage (21) ; la couche de couverture (17) étant formée directement sur le corps (2) par dépôt d'une suspension céramique avec des agents moussants sur le dessus du corps (2), de manière à pénétrer à l'intérieur de l'accessoire d'ancrage (21) ; le corps (2) et la couche de couverture (17) attachée à celui-ci étant ensuite séchés et frittés ensemble.

8. Procédé selon la revendication 7, comprenant une étape consistant à créer des éléments tubulaires (34) dans la structure CMC creuse (6) par enroulement filamentaire, au cours du même processus d'enroulement filamentaire utilisé pour fabriquer la structure CMC creuse (6) et de manière à définir des canaux de refroidissement (33) respectifs dans le corps (2).

9. Procédé selon l'une quelconque des revendications 7 à 8, comprenant une étape consistant à incorporer dans la structure CMC creuse (6), pendant son processus d'enroulement filamentaire, des matériaux fugitifs ou sacrificiels sous la forme d'éléments allongés, tels que des faisceaux de fibres de carbone ou des tiges de graphite ou d'autres éléments similaires, qui sont ensuite brûlés pendant une étape de frittage du corps (2) pour créer des canaux de refroidissement (33) respectifs.

10. Procédé selon l'une quelconque des revendications 7 à 9, comprenant une étape consistant à percer des trous (35) dans le carreau (1) pour le passage d'air.

11. Procédé selon l'une quelconque des revendications 7 à 10, comprenant une étape consistant à munir le carreau (1) d'un élément amortisseur de vibrations (36), qui est monté sur la carreau (1) pendant le processus d'enroulement filamentaire et en particulier pendant que le corps (2) est formé par enroulement filamentaire ; ou est défini par un espace vide laissé dans le corps (2) pendant le processus d'enroulement filamentaire.

12. Utilisation du carreau (1) selon l'une quelconque des revendications 1 à 6 pour revêtir une surface interne d'une turbine à gaz, en particulier une surface d'un dispositif de combustion ou d'une chambre de combustion.
